# EUROPÄISCHE PATENTSCHRIFT

(11) **EP 3 042 066 B1**
(45) Veröffentlichungstag und Bekanntmachung des Hinweises auf die Patenterteilung: **11.09.2019**
(21) Anmeldenummer: 14739116.3
(22) Anmeldetag: 09.07.2014
(51) Int. Cl.: F02M 55/02, F02M 61/14, F16B 5/02, F02M 69/46, F16M 13/02, F02M 63/02

(54) **VORRICHTUNG MIT EINEM HALTER UND EINEM BRENNSTOFFVERTEILER ZUR BEFESTIGUNG AN EINER BRENNKRAFTMASCHINE UND HERSTELLUNGSVERFAHREN DER VORRICHTUNG**
APPARATUS COMPRISING FASTENING MEANS AND A FUEL DISTRIBUTOR FOR MOUNTING ON AN INTERNAL COMBUSTION ENGINE AND METHOD OF MANUFACTURING THE APPARATUS
DISPOSITIF COMPORTANT UN MOYEN DE FIXATION ET UN DISTRIBUTEUR DE COMBUSTIBLE POUR MONTAGE SUR UN MOTEUR À COMBUSTION INTERNE ET PROCÉDÉ DE FABRICATION DU DISPOSITIF

(30) Priorität: 06.09.2013 DE 102013217810
(43) Veröffentlichungstag der Anmeldung: 13.07.2016
(73) Patentinhaber: Robert Bosch GmbH, 70442 Stuttgart (DE)
(72) Erfinder: LANG, Klaus, 70439 Stuttgart (DE); HAUG, Martin, 71263 Weil Der Stadt (DE); FROIHOFER, Thomas, 74336 Brackenheim (DE)
(86) Internationale Anmeldenummer: PCT/EP2014/064700
(87) Internationale Veröffentlichungsnummer: WO 2015/032530

(56) Entgegenhaltungen:
- EP-A1- 2 372 140
- DE-A1-102008 044 165
- DE-U1-202011 005 464
- US-A1- 2011 073 074
- US-A1- 2013 125 864

## Beschreibung

### Stand der Technik

Die Erfindung betrifft eine Vorrichtung mit einem Halter und einer Komponente, insbesondere einem Brennstoffverteiler, zur Befestigung an einer Brennkraftmaschine sowie ein Herstellungsverfahren der Vorrichtung. Speziell betrifft die Erfindung das Gebiet der Brennstoffeinspritzanlagen von Brennkraftmaschinen.

Aus der DE 10 2008 044 165 A1 ist ein Kraftstoffzuteiler für eine Brennkraftmaschine mit einem Gehäuse bekannt. An den Kraftstoffzuteiler sind mehrere Einspritzventile angeschlossen, die den Kraftstoff unter hohem Druck in ihnen direkt zugeordnete Brennräume einspritzen. Für die Befestigung des Kraftstoffzuteilers dient eine Schraubenhalterung. Eine Montageschraube wird in eine Bohrung der Schraubenhalterung eingeführt. Zu beiden Seiten der Schraubenhalterung umfasst der Schaft der Montageschraube jeweils ein ringscheibenförmiges Dämpfungselement. Auf der vom Schraubenkopf abgewandten Seite weist die Montageschraube eine Schraubenfixierung aus Kunststoff und eine Distanzhülse auf. Wird das Dämpfungselement zwischen dem Kraftstoffzuteiler und der Anbaustruktur und zusätzlich im Bereich der Montageschrauben eingesetzt, dann wird eine komplette Isolation ohne metallische Kontakte zwischen dem Kraftstoffzuteiler und der Anbaustruktur erzielt, was zu einer maximalen Reduzierung der Körperschallübertragung durch die Montageschrauben in die Anbaustruktur führt.

Der aus der DE 10 2008 044 165 A1 bekannte Kraftstoffzuteiler und die diesbezügliche Befestigung des Kraftstoffzuteilers haben den Nachteil, dass die Positionsgenauigkeit der Bohrung der Schraubenhalterung und somit auch die Positionsgenauigkeit der Befestigung gering sind. Hierdurch müssen für die Montage Toleranzen vorgehalten werden, die aber wiederum zu einer Positionsungenauigkeit bezüglich des Kraftstoffzuteilers führen. Ferner sind in der Praxis mehrere Schraubenhalterungen erforderlich. Dann kommt es bei der Befestigung aufgrund der Positionsungenauigkeiten über den Kraftstoffzuteiler zu mechanischen Verspannungen. Dies begrenzt den möglichen Einsatz des bekannten Kraftstoffzuteilers mit dieser Befestigung.

Aus der US 2011/0073074 A1 ist bereits ein Halter zur Befestigung einer Komponente, insbesondere eines Brennstoffverteilers, an einer Brennkraftmaschine bekannt. Der Halter umfasst ein Halteelement, wobei das Halteelement einen komponentenseitigen Verbindungsabschnitt aufweist, an dem das Halteelement mit der Komponente verbindbar ist. Das Halteelement weist einen befestigungsmittelseitigen Verbindungsabschnitt auf, an dem das Haltelement über ein Befestigungsmittel an der Brennkraftmaschine befestigbar ist, wobei zumindest ein Aufnahmeteil und eine Befestigungshülse vorgesehen sind. Das Aufnahmeteil dient zum Verbinden der Befestigungshülse mit dem befestigungsmittelseitigen Verbindungsabschnitt des Halteelements. Die Befestigungshülse weist eine Durchgangsöffnung auf, durch die das Befestigungsmittel führbar ist. Zur Befestigung des Halteelements an der Brennkraftmaschine wird die Befestigungshülse auf den Zylinderkopf der Brennkraftmaschine aufgesetzt, oberhalb und unterhalb des Verbindungsabschnitts des Halteelements werden Dämpfungselemente eingelegt, auf das obere Dämpfungselement wird das hülsenförmige Aufnahmeteil die Befestigungshülse umgebend aufgesetzt und danach das Befestigungsmittel angezogen bis der Schraubenkopf auf der Befestigungshülse und dem Aufnahmeteil aufsetzt. Das Aufnahmeteil dient dabei als Abstandshalter, der ein Verrutschen der Dämpfungselemente verhindert.

Aus der DE 20 2011 005 464 U1 ist ebenfalls ein Halter zur Befestigung einer Komponente, insbesondere eines Brennstoffverteilers, an einer Brennkraftmaschine bekannt.

### Offenbarung der Erfindung

Die erfindungsgemäße Vorrichtung mit den Merkmalen des Anspruchs 1 und das erfindungsgemäße Herstellungsverfahren mit den Merkmalen des Anspruchs 8 haben den Vorteil, dass eine verbesserte Ausgestaltung ermöglicht ist. Insbesondere können zunächst große Einzelteiltoleranzen ermöglicht werden und anschließend dennoch hohe Anforderungen bezüglich vorgegebener Baugruppentoleranzen erzielt werden. Somit ergibt sich auch ein verbesserter Einsatzbereich bei geringen Herstellungskosten.

In vorteilhafter Weise ist an dem komponentenseitigen Verbindungsabschnitt eine Anlagefläche ausgestaltet, die als Teil einer Zylindermantelfläche ausgestaltet ist. Hierdurch kann das Halteelement an seinem komponentenseitigen Verbindungsabschnitt beispielsweise an einen rohrförmigen Grundkörper der Komponente angelegt werden, um die Montage zu ermöglichen. Anschließend kann das Halteelement relativ zu dem rohrförmigen Grundkörper bewegt und dadurch positioniert werden. Solche Bewegungen können durch Drehbewegungen und/oder lineare Verschiebungen entlang einer Achse des rohrförmigen Grundkörpers erfolgen. Der Kontakt zwischen der Anlagefläche und einer Außenseite des rohrförmigen Grundkörpers bleibt hierbei bestehen, wobei der Kontakt flächig erfolgt. Wenn die richtige Position erreicht ist, dann kann die Verbindung des Halteelements an seinem komponentenseitigen Verbindungsabschnitt mit dem rohrförmigen Grundkörper erfolgen.

Vorteilhaft ist es, dass an dem befestigungsmittelseitigen Verbindungsabschnitt eine Ausnehmung vorgesehen ist, in der die Befestigungshülse anordenbar ist, und dass zwischen der Befestigungshülse und der Ausnehmung einer Positionierungsspiel vorgesehen ist, das vor dem Verbinden der Befestigungshülse über das Aufnahmeteil mit dem befestigungsseitigen Verbindungsabschnitt eine Positionierung der Befestigungshülse in einer axialen Richtung der Befestigungshülse und/oder in zumindest einer radialen Richtung der Befestigungshülse relativ zu dem befestigungsmittelseitigen Verbindungsabschnitt ermöglicht. Dies ermöglicht auch eine Herstellung der Einzelteile mit größeren Toleranzen. Durch eine entsprechend genaue Festlegung der Endpositionen der Einzelteile kann dann dennoch eine große Genauigkeit erzielt werden. Beispielsweise können somit Herstellungsverfahren für die Herstellung der Einzelteile zum Einsatz kommen, die in der Regel weniger genau, aber kostengünstig sind. Zum Beispiel können Stanzbiegeteile zum Einsatz kommen. Insbesondere kann der Halter als Stanzbiegeteil ausgestaltet sein. Eine kostenintensive Nachbearbeitung der Einzelteile kann dann reduziert werden und gegebenenfalls auch ganz entfallen.

Vorteilhaft ist es hierbei auch, dass die Ausnehmung, die an dem befestigungsmittelseitigen Verbindungsabschnitt vorgesehen ist, als Durchgangsbohrung ausgestaltet ist. Die Befestigungshülse kann dann in der Durchgangsbohrung relativ zu dem befestigungsmittelseitigen Verbindungsabschnitt positioniert werden. Die Durchgangsbohrung ist hierbei seitlich geschlossen. Möglich ist es allerdings auch, dass die Ausnehmung, die an dem befestigungsmittelseitigen Verbindungsabschnitt vorgesehen ist, zu einer Seite des befestigungsmittelseitigen Verbindungsabschnitt offen ist. Hierdurch kann die Befestigungshülse von der offenen Seite in den befestigungsseitigen Verbindungsabschnitt eingebracht werden. Dies ermöglicht unter anderem Ausgestaltungen der Befestigungshülse, die nicht zum Einbringen in eine entsprechend enge Durchgangsbohrung geeignet sind.

In vorteilhafter Weise ist das Aufnahmeteil als teilringförmiges Aufnahmeteil ausgestaltet, das die Befestigungshülse umfänglich teilweise umschließt. Möglich ist es allerdings auch, dass das Aufnahmeteil als ringförmiges Aufnahmeteil ausgestaltet ist, das die Befestigungshülse umfänglich umschließt. Wenn die Einzelteile zueinander positioniert sind, dann wird über das Aufnahmeteil die Verbindung zwischen der Befestigungshülse und dem befestigungsmittelseitigen Verbindungsabschnitt des Halteelements hergestellt. Die Verbindung des Aufnahmeteils mit der Befestigungshülse sowie die Verbindung des Aufnahmeteils mit dem befestigungsmittelseitigen Verbindungsabschnitt kann beispielsweise durch Schweißen, Löten oder Kleben erfolgen.

Durch die in den Unteransprüchen aufgeführten Maßnahmen sind vorteilhafte Weiterbildungen der im Anspruch 1 angegebenen Vorrichtung und des im Anspruch 8 angegebenen Verbindungsverfahrens möglich.

Das Befestigungsmittel, über das das Halteelement an der Brennkraftmaschine befestigbar ist, ist nicht notwendigerweise Bestandteil des erfindungsgemäßen Halters. Als Befestigungsmittel kann beispielsweise eine Befestigungsschraube dienen. Die Befestigung des Halteelements an der Brennkraftmaschine kann direkt an der Brennkraftmaschine, insbesondere an einem Zylinderkopf der Brennkraftmaschine, erfolgen. Das Halteelement kann allerdings auch mittels einer geeigneten Anbaustruktur an der Brennkraftmaschine befestigt werden. Somit ist das Halteelement über das Befestigungsmittel zumindest mittelbar mit der Brennkraftmaschine verbunden, wenn die Montage der Komponente, insbesondere des Brennstoffverteilers, an der Brennkraftmaschine erfolgt ist.

Die Komponente ist vorzugsweise als Brennstoffverteiler ausgestaltet. Solch ein Brennstoffverteiler kann gegebenenfalls auch zum Speichern einer gewissen Menge von Brennstoff dienen und den Brennstoff auf einzelne Brennstoffeinspritzventile aufteilen. Die Brennstoffeinspritzventile können hierbei auf geeignete Weise mit dem Brennstoffverteiler verbunden werden.

Insbesondere können an dem Brennstoffverteiler Tassen vorgesehen sein, in die Einfüllstutzen der Brennkraftmaschine eingefügt werden. Die Befestigung der Brennstoffeinspritzventile an der Brennkraftmaschine kann hierbei ebenfalls über den Brennstoffverteiler, der zumindest über einen Halter an der Brennkraftmaschine befestigt ist, erfolgen. Die Brennstoffeinspritzventile können allerdings auch separat an der Brennkraftmaschine befestigt werden.

Vorteilhaft ist es auch, dass ein weiteres Aufnahmeteil vorgesehen ist, dass das weitere Aufnahmeteil zum Verbinden der Befestigungshülse mit dem befestigungsmittelseitigen Verbindungsabschnitt des Halteelements dient und dass der befestigungsmittelseitige Verbindungsabschnitt zum Verbinden der Befestigungshülse mit dem befestigungsmittelseitigen Verbindungsabschnitt zwischen dem Aufnahmeteil und dem weiteren Aufnahmeteil angeordnet ist. Hierbei können das Aufnahmeteil und das weitere Aufnahmeteil identisch ausgestaltet sein. Das Aufnahmeteil und das weitere Aufnahmeteil können allerdings auch unterschiedlich ausgestaltet sein. Beispielsweise können die Aufnahmeteile scheibenförmig ausgestaltet sein und unterschiedliche Scheibendicken und/oder unterschiedliche Scheibenaußendurchmesser und/oder unterschiedliche Scheibeninnendurchmesser aufweisen. Über die beiden Aufnahmeteile ist dann eine höhere Belastbarkeit der Verbindung zwischen der Befestigungshülse und dem befestigungsmittelseitigen Verbindungsabschnitt realisierbar.

Vorteilhaft ist es, dass das Aufnahmeteil an einer Außenseite eine zumindest teilweise umlaufende Aussparung aufweist. Insbesondere ist es vorteilhaft, dass das Aufnahmeteil an der Außenseite eine zumindest teilweise umlaufende Nut aufweist, falls der befestigungsmittelseitige Verbindungsabschnitt zur Seite offen ist. Hierbei ist es ferner vorteilhaft, dass der befestigungsmittelseitige Verbindungsabschnitt zum Verbinden der Befestigungshülse mit dem befestigungsmittelseitigen Verbindungsabschnitt an seiner Ausnehmung in die Aussparung des Aufnahmeteils eingreift. Somit kann durch das Aufnahmeteil sowohl an einer Oberseite als auch an einer Unterseite des befestigungsmittelseitigen Verbindungsabschnitts eine Verbindung mit dem Befestigungsmittelseitigen Verbindungsabschnitt und der Befestigungshülse erfolgen. Zugleich vereinfacht sich hierdurch die Montage, da die Anzahl der Bauteile reduziert wird.

Vorteilhaft ist es auch, dass die Befestigungshülse einen Befestigungsabschnitt aufweist, an dem das Aufnahmeteil zum Verbinden der Befestigungshülse mit dem befestigungsmittelseitigen Verbindungsabschnitt angeordnet ist, und dass die Befestigungshülse an dem befestigungsmittelseitigen Verbindungsabschnitt relativ zu zumindest einem Endabschnitt der Befestigungshülse verjüngt ausgestaltet ist. Hierdurch kann für enge Bauräume bei gleichbleibenden Anschlussdurchmessern der Befestigungshülse die Befestigungshülse zumindest in einem mittleren Abschnitt zwischen den Endabschnitten verjüngt werden. Dadurch kann die Geometrie, insbesondere der Außendurchmesser im mittleren Abschnitt, verkleinert werden. Wenn der mittlere Abschnitt der Befestigungshülse relativ zu beiden Endabschnitten verjüngt ausgestaltet ist, dann ist der befestigungsmittelseitige Verbindungsabschnitt nach einer Seite offen ausgestaltet, um das Einbringen der Befestigungshülse zu ermöglichen.

Bei der Ausgestaltung des Grundkörpers der Komponente ist es vorteilhaft, dass zumindest ein Befestigungsbereich einer Außenseite des Grundkörpers als Teil einer Zylindermantelfläche ausgestaltet ist, wobei der diesbezügliche Halter an seinem komponentenseitigen Verbindungsabschnitt mit dem Befestigungsbereich an der Außenseite des Grundkörpers befestigt ist. Dies ermöglicht bei der Montage, also vor der endgültigen Befestigung, eine flächige Anlage des komponentenseitigen Verbindungsabschnitts an dem Befestigungsbereich, während die Positionierung durchgeführt wird.

### Kurze Beschreibung der Zeichnungen

Bevorzugte Ausführungsbeispiele der Erfindung sind in der nachfolgenden Beschreibung unter Bezugnahme auf die beigefügten Zeichnungen, in den sich entsprechende Elemente mit übereinstimmenden Bezugszeichen versehen sind, näher erläutert. Es zeigen:
Fig. 1 eine Anordnung mit einer Komponente und mehreren Haltern in einer auszugsweisen, schematischen, räumlichen Darstellung entsprechend einem ersten Ausführungsbeispiel der Erfindung;
Fig. 2 eine auszugsweise, schematische Schnittdarstellung der in Fig. 1 dargestellten Anordnung entsprechend dem ersten Ausführungsbeispiel der Erfindung und eine Brennkraftmaschine;
Fig. 3 eine auszugsweise, schematische Darstellung der in Fig. 2 gezeigten Anordnung aus der mit III bezeichneten Blickrichtung;
Fig. 4 eine Vorrichtung zur Montage einer Anordnung mit einer Komponente und mehreren Haltern in einer schematischen Darstellung entsprechend einem zweiten Ausführungsbeispiel zur Erläuterung der Funktionsweise der Erfindung;
Fig. 5 die in Fig. 4 dargestellte Anordnung entsprechend dem zweiten Ausführungsbeispiel der Erfindung in einer schematischen Darstellung aus der mit V bezeichneten Blickrichtung;
Fig. 6 die in Fig. 1 dargestellte Anordnung in einer auszugsweisen, schematischen, räumlichen Darstellung entsprechend einem dritten Ausführungsbeispiel der Erfindung;
Fig. 7 die in Fig. 1 dargestellte Anordnung in einer auszugsweisen, schematischen, räumlichen Darstellung entsprechend einem vierten Ausführungsbeispiel der Erfindung;
Fig. 8 ein Aufnahmeteil der in Fig. 7 dargestellten Anordnung in einer schematischen, axialen Schnittdarstellung entsprechend dem vierten Ausführungsbeispiel der Erfindung;
Fig. 9 die in Fig. 1 dargestellte Anordnung in einer auszugsweisen, schematischen, räumlichen Darstellung entsprechend einem fünften Ausführungsbeispiel der Erfindung und
Fig. 10 die in Fig. 1 dargestellte Anordnung in einer auszugsweisen, schematischen, räumlichen Darstellung entsprechend einem sechsten Ausführungsbeispiel der Erfindung.

### Ausführungsformen der Erfindung

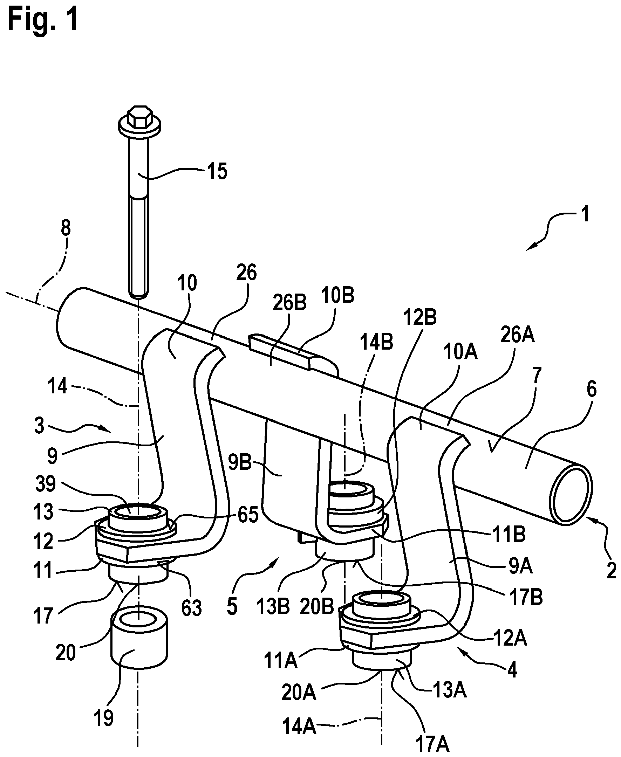

Fig. 1 zeigt eine Anordnung 1 mit einer Komponente 2 und mehreren Haltern 3, 4, 5 in einer auszugsweisen, schematischen, räumlichen Darstellung entsprechend einem ersten Ausführungsbeispiel. Die Komponente 2 weist einen rohrförmigen Grundkörper 6 mit einer zylindermantelförmigen Außenseite 7 auf.

Ferner weist die Komponente 2 eine Längsachse 8 auf, entlang der sich der rohrförmige Grundkörper 6 erstreckt. Die Komponente 2 kann beispielsweise als Brennstoffverteiler ausgestaltet sein. Hierbei können an dem rohrförmigen Grundkörper 6 geeignete Ausgänge, insbesondere Tassen, montiert sein, um den zugeführten Brennstoff auf mehrere Brennstoffeinspritzventile aufzuteilen. Solche Ausgänge beziehungsweise Tassen sind zur Vereinfachung der Darstellung nicht gezeigt.

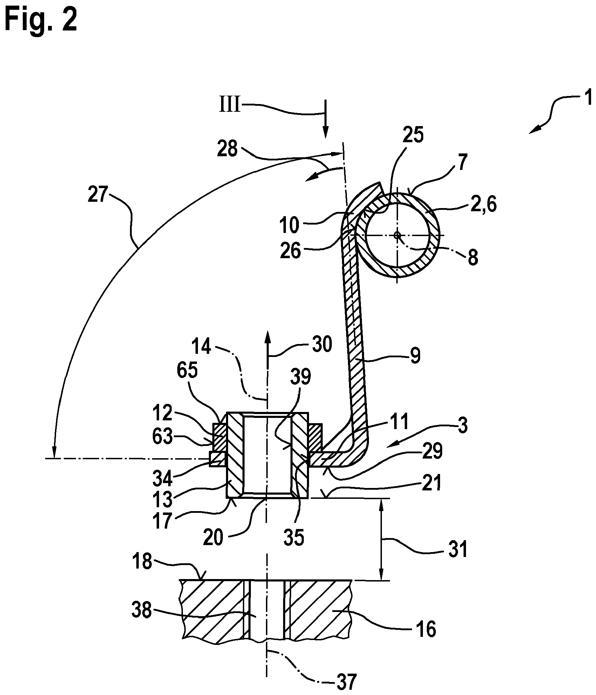

Der Halter 3 weist ein Halteelement 9 mit einem komponentenseitigen Verbindungsabschnitt 10 und einem befestigungsmittelseitigen Verbindungsabschnitt 11 auf. Ferner weist der Halter 3 ein Aufnahmeteil 12 und eine Befestigungshülse 13 auf. Durch die Befestigungshülse 13 ist eine als Befestigungsachse 14 dienende Achse definiert. Ein dem Halter 3 zugeordnetes Befestigungsmittel 15, das als Befestigungsschraube 15 ausgestaltet ist, wird entlang der Achse 14 durch die Befestigungshülse 13 geführt, um dem befestigungsmittelseitigen Verbindungsabschnitt 11 des Halteelements 9 an einer Brennkraftmaschine 16 (Fig. 2), insbesondere einem Zylinderkopf der Brennkraftmaschine 16, zu befestigen. Zwischen einer Unterseite 17 der Befestigungshülse 13 und einer Oberfläche 18 der Brennkraftmaschine 16 kann hierbei eine Distanzhülse 19 angeordnet sein. Die Distanzhülse 19 kann hierbei aus einem elastischen Werkstoff gebildet sein, um eine Entkoppelung zu ermöglichen.

Die Achse 14 und die Unterseite 17 der Befestigungshülse 13 beziehungsweise eine Fläche, in der die Unterseite 17 der Befestigungshülse 13 liegt, haben einen Schnittpunkt 20. Der Schnittpunkt 20 ergibt sich hierbei auch als Schnittpunkt 20 zwischen der Achse 14 und einer Ausrichtfläche 21 (Fig. 2).

Entsprechend weisen die Halter 4, 5 Halteelemente 9A, 9B mit komponentenseitigen Verbindungsabschnitten 10A, 10B und befestigungsmittelseitigen Verbindungsabschnitten 11A, 11B auf. Ferner weisen die Halter 4, 5 Aufnahmeteile 12A, 12B auf, die zum Befestigen von Befestigungshülsen 13A, 13B an den befestigungsmittelseitigen Verbindungsabschnitten 11A, 11B dienen. Durch die Befestigungshülsen 13A, 13B sind Achsen (Befestigungsachsen) 14A, 14B definiert. Über dem Befestigungsmittel 15 entsprechende, nicht dargestellte Befestigungsmittel ist gegebenenfalls unter Nutzung der Distanzhülse 19 entsprechenden, nicht dargestellten Distanzhülsen eine Befestigung an mehreren Punkten des Zylinderkopfs 16 möglich. Unterseiten 17A, 17B der Befestigungshülsen 13A, 13B der Halter 4, 5 liegen hierbei vorzugsweise in der Ausrichtfläche 21, in der auch die Unterseite 17 der Befestigungshülse 13 liegt. Hierbei ergeben sich zwischen der Achse 14A beziehungsweise der Achse 14B und der Ausrichtfläche 21 die Schnittpunkte 20A, 20B. Die Halter 4, 5 sind somit entsprechend dem Halter 3 ausgestaltet. Hierbei können die Halter 3 bis 5 identisch zueinander ausgestaltet sein.

Fig. 2 zeigt eine auszugsweise, schematische Schnittdarstellung der in Fig. 1 dargestellten Anordnung 1 entsprechend dem ersten Ausführungsbeispiel und die Brennkraftmaschine 16. Hierbei ist exemplarisch ein Schnitt durch das Halteelement 9 dargestellt, wobei die Achse 14 der Befestigungshülse 13 in der Schnittebene liegt. Ferner ist die Längsachse 8 des rohrförmigen Grundkörpers 6 senkrecht zu der Schnittebene orientiert.

An dem komponentenseitigen Verbindungsabschnitt 10 ist eine Anlagefläche 25 ausgestaltet. Ferner ist an der Außenseite 7 des rohrförmigen Grundkörpers 6 ein Befestigungsbereich 26 vorgesehen, an dem das Halteelement 9 mit seiner Anlagefläche 25 anliegt. Entsprechend sind auch für die Halter 4, 5 Befestigungsbereiche 26A, 26B an dem rohrförmigen Grundkörper 6 vorgesehen. Die Anlagefläche 25 ist als Teil einer Zylindermantelfläche ausgestaltet. Ferner ist der Befestigungsbereich 26 als Teil einer Zylindermantelfläche ausgestaltet. In diesem Ausführungsbeispiel ist die Außenseite 7 insgesamt zylindermantelförmig ausgestaltet, so dass sich dadurch ohnehin die zylindermantelförmigen Befestigungsbereiche 26A, 26B ergeben.

Zur Verbindung des Halters 9 mit der Komponente 2 wird der komponentenseitige Verbindungsabschnitt 10 des Halteelements 9 an den Befestigungsbereich 26 der Außenseite 7 des rohrförmigen Grundkörpers 6 angelegt. Hierbei ist es aufgrund von Fertigungstoleranzen möglich, dass ein Winkel 27 des Halteelements 9 variiert, was sich in der Orientierung der Unterseite 17 bezüglich der Ausrichtfläche 21 auswirkt. Durch Drehen des Halteelements 9 in oder entgegen einer Drehrichtung 28 kann die Unterseite 17 der Befestigungshülse 13 beziehungsweise eine Unterseite 29 des befestigungsmittelseitigen Verbindungsabschnitts 11 parallel zu der Ausrichtfläche 21 orientiert werden. Hierbei bleibt der flächige Kontakt zwischen der Anlagefläche 25 und dem Befestigungsbereich 26 beim Ausrichten bestehen.

Ferner kann die Befestigungshülse 13 in oder entgegen einer Richtung 30 verstellt werden. Dadurch kann ein Abstand 31 zwischen der Unterseite 17 und der Oberfläche 18 des Zylinderkopfs 16 für die spätere Montage eingestellt werden, um im montierten Zustand den konstruktiv vorgegebenen Abstand der Längsachse 8 des rohrförmigen Grundkörpers 6 von der Oberfläche 18 zu erzielen.

Über eine Drehung in oder entgegen der Drehrichtung 28 ist somit ein Rotationsausgleich ermöglicht. Ferner ist durch eine Verschiebung der Befestigungshülse 13 in oder entgegen der Richtung 30 ein Vertikalausgleich ermöglicht. Somit kann die Achse 14 der Befestigungshülse 13 senkrecht zu der Oberfläche 18 des Zylinderkopfs 16 ausgerichtet werden. Ferner kann der Abstand 31 zwischen der Unterseite 17 der Befestigungshülse 13 und der Oberfläche 18 des Zylinderkopfs 16 eingestellt werden.

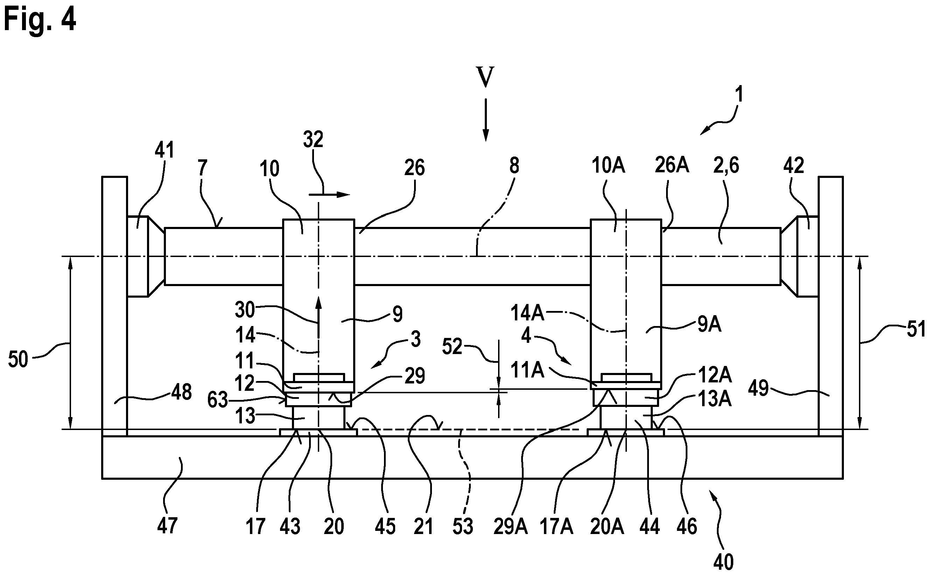

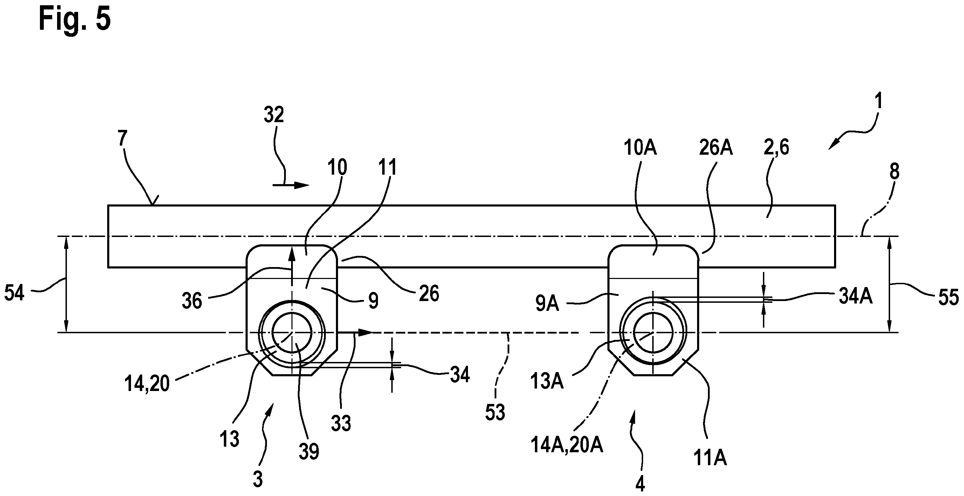

Die Befestigungshülse 13 weist eine Durchgangsöffnung 39 auf, die in diesem Ausführungsbeispiel als Durchgangsbohrung 39 ausgestaltet ist. Bei der Positionierung der Befestigungshülse 13 relativ zu dem befestigungsmittelseitigen Verbindungsabschnitt 11 wird die Befestigungshülse 13 relativ zu dem befestigungsmittelseitigen Verbindungsabschnitt 11 in oder entgegen der Richtung 30, also axial zu der Achse 14 der Durchgangsöffnung 39, verschoben, bis der vorgegebene Abstand 31 erzielt ist. Dies kann auf unterschiedliche Weise erreicht werden, wobei sich die einzelnen Positionierungen gegenseitig beeinflussen beziehungsweise die Bewegung der Befestigungshülse 13 relativ zu dem befestigungsmittelseitigen Verbindungsabschnitt 11 auch durch die Drehung des Halteelements 9 in oder entgegen der Drehrichtung 28 verursacht sein kann, wenn die Position der Befestigungshülse 13 bereits anfänglich festgelegt ist, wie es beispielsweise auch anhand der Fig. 4 und 5 beschrieben ist.

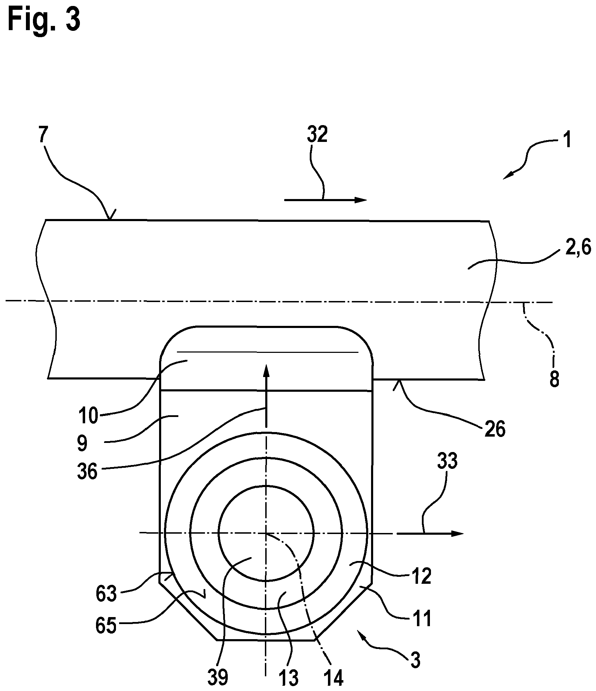

Fig. 3 zeigt eine auszugsweise, schematische Darstellung der in Fig. 2 gezeigten Anordnung 1 aus der mit III bezeichneten Blickrichtung. Der komponentenseitige Verbindungsabschnitt 10 des Halteelements 9 kann vor dem Verbinden in und entgegen einer Richtung 32 entlang der Längsachse 8 des rohrförmigen Grundkörpers 6 verschoben werden. Hierfür ist der Befestigungsbereich 26 auf geeignete Weise entlang der Längsachse 8 ausgedehnt. In diesem Ausführungsbeispiel ist ohnehin die gesamte Außenseite 7 zylindermantelförmig ausgestaltet, wodurch auch eine stets ausreichend große Erstreckung des Befestigungsbereichs 26 erzielt ist.

Ferner kann die Befestigungshülse 13 in und entgegen einer Richtung 33 relativ zu dem befestigungsmittelseitigen Verbindungsabschnitt 11 bewegt werden, was durch einen Ringspalt 34 (Fig. 2) ermöglicht ist. Der Ringspalt 34 ist hierbei zwischen der Befestigungshülse 13 und dem befestigungsmittelseitigen Verbindungsabschnitt 11 ausgebildet. Hierfür ist an dem befestigungsmittelseitigen Verbindungsabschnitt eine Ausnehmung 35 vorgesehen, in der die Befestigungshülse 13 mit umfänglichen Positionierungsspiel 34, das durch den Ringspalt 34 gegeben ist, anordenbar ist.

Ferner kann die Befestigungshülse 13 aufgrund des Positionierungsspiels 34 auch in und entgegen einer Richtung 36 relativ zu dem befestigungsmittelseitigen Verbindungsabschnitt 11 bewegt werden. Bezüglich der Achse 14, die die Befestigungsachse 14 darstellt, kann die Befestigungshülse 13 somit in den radialen Richtungen 33, 36 relativ zu dem befestigungsmittelseitigen Verbindungsabschnitt 11 positioniert werden. Dadurch kann beispielsweise ausgehend von einer Positionierung, bei der Unterseite 17 der Befestigungshülse 13 parallel zu der Oberfläche 18 der Brennkraftmaschine 16 beziehungsweise der Ausrichtfläche 21 ist, die Achse 14 in eine Position gebracht werden, in der sie für die Befestigung an der Brennkraftmaschine 16 mit einer Achse 37 einer Gewindebohrung 38 des Zylinderkopfes 16 übereinstimmt.

In diesem Ausführungsbeispiel ist die radiale Richtung 33 parallel zu der Längsachse 8 des rohrförmigen Grundkörpers 6 orientiert. Die radiale Richtung 36 ist parallel zu der Unterseite 29 des befestigungsmittelseitigen Verbindungsabschnitts 11 und senkrecht zu der radialen Richtung 33 orientiert. Durch die Verschiebbarkeit der Befestigungshülse 13 relativ zu dem befestigungsmittelseitigen Verbindungsabschnitt 11 in den radialen Richtungen 33, 36 ist somit ein radialer Toleranzausgleich ermöglicht. Ferner ist durch die Verschiebbarkeit des gesamten Halterelements 9 in der Richtung 32 ein Toleranzausgleich entlang der Längsachse (Rohrachse) 8 ermöglicht.

Fig. 4 zeigt eine Vorrichtung 40 zur Montage der Anordnung 1, die aus einem rohrförmigen Grundkörper 6 einer Komponente 2 und den Haltern 3, 4 zusammengesetzt wird, in einer schematischen Darstellung entsprechend einem zweiten Ausführungsbeispiel zur Erläuterung der Funktionsweise der Erfindung. Hierbei wird zunächst eine Positionierung der Einzelteile der Anordnung 1 ausgeführt. Anschließend werden die zueinander positionierten Einzelteile miteinander verbunden.

Der rohrförmige Grundkörper 6 wird zwischen Aufnahmekegeln 41, 42 der Vorrichtung 40 eingespannt. Hierbei wird die Längsachse 8 des rohrförmigen Grundkörpers 6 parallel zu der Ausrichtfläche 21 orientiert. Ferner weist die Vorrichtung 40 Aufsteckdorne 43, 44 auf, wobei Oberseiten 45, 46 von Fußbereichen der Aufsteckdorne 43, 44 auf gleicher Höhe liegen und die Lage der Ausrichtfläche 21 definieren. Die Befestigungshülsen 13, 13A werden auf die Aufsteckdorne 43, 44 gesteckt, so dass die Unterseite 17 der Befestigungshülse 13 und eine Unterseite 17A der Befestigungshülse 13A plan auf den Oberseiten 45, 46 der Aufsteckdorne 43, 44 aufliegen und zentrisch auf den Aufsteckdornen 43, 44 stecken. Somit befinden sich die Unterseiten 17, 17A der Befestigungshülsen 13, 13A in der Ausrichtfläche 21. Somit sind die Bauteile, nämlich der rohrförmige Grundkörper 6 und die Befestigungshülsen 13, 13A, an die eine hohe Positionsgenauigkeit gestellt wird, über die Vorrichtung 40 zueinander positioniert.

Anschließend werden die Aufnahmeteile 12, 12A über die Befestigungshülsen 13, 13A geschoben. Somit ist die radiale Ausrichtung der Aufnahmeteile 12, 12A bezüglich der Baugruppe bestimmt. Die axiale Position der Aufnahmeteile 12, 12A ist noch nicht festgelegt.

Die Halteelemente 9, 9A werden nun an dem rohrförmigen Grundkörper 6 positioniert. Das Halteelement 9 wird in oder entgegen der Drehrichtung 28 um die Längsachse 8 gedreht, bis die Unterseite 29 des befestigungsmittelseitigen Verbindungsabschnitts 11 parallel zu der Ausrichtfläche 21 beziehungsweise parallel zu der Oberseite 45 des Aufsteckdorns 43 ist. Somit ist die Unterseite 29 des Halteelements 9 auch parallel zur Stirnfläche des Aufnahmeteils 12. Dadurch kann sich je nach Toleranzlage der Einzelteile der Ringspalt 34 beziehungsweise das Positionierungsspiel 34 verschieden groß, also nicht gleichmäßig entlang des Umfangs, einstellen.

Dann wird das Aufnahmeteil 12 auf der Befestigungshülse 13 verschoben, bis das Aufnahmeteil 12 in Kontakt mit dem befestigungsmittelseitigen Verbindungsabschnitt 11 ist.

Der beschriebene Vorgang wird entsprechend auch für den anderen Haltern 9A und gegebenenfalls weitere Halter, wie den Halter 9B, durchgeführt. Anschließend sind die Einzelteile der Anordnung 1 zueinander positioniert. In dieser Position werden die Einzelteile dann zueinander fixiert. Das Fixieren kann beispielsweise durch Schweißen und/oder Löten und/oder Kleben erfolgen.

In diesem Ausführungsbeispiel weist die Vorrichtung 40 eine Grundplatte 47 und Seitenplatten 48, 49 auf. Die Aufsteckdorne 43, 44 sind an der Grundplatte 47 befestigt. Die Aufnahmekegel 41, 42 sind an der jeweiligen Seitenplatte 48, 49 befestigt. Während der Positionierung wird ein Höhenmaß 50 der Längsachse (Rohrachse) 8 zu der Unterseite 17 der Befestigungshülse 13 festgelegt. Ferner wird ein Höhenmaß 51 der Rohrachse 8 zu der Unterseite 17A der Befestigungshülse 13A festgelegt. In diesem Ausführungsbeispiel erfolgt die Festlegung über den Abstand zwischen der Rohrachse 8 und der Ausrichtfläche 21, der gleich den in diesem Falle identischen Höhenmaßen 50, 51 ist. Bei einer abgewandelten Ausgestaltung können sich die Höhenmaße 50, 51 allerdings auch unterscheiden.

Da die Halteelemente 9, 9A mit gewissen Toleranzen hergestellt werden können, können sich die positionierten beziehungsweise fixierten Halter 3, 4 etwas voneinander unterscheiden. Beispielsweise kann sich ein Höhenunterschied 52 zwischen der Unterseite 29 des befestigungsmittelseitigen Verbindungsabschnitts 11 und einer Unterseite 29A des befestigungsmittelseitigen Verbindungsabschnitts 11A ergeben.

Fig. 5 zeigt die in Fig. 4 dargestellte Anordnung 1 entsprechend dem zweiten Ausführungsbeispiel in einer schematischen Darstellung aus der mit V bezeichneten Blickrichtung. Bevor die einzelnen Bauteile der Anordnung 1 miteinander verbunden werden, werden auch die Befestigungshülsen 13, 13A in den radialen Richtungen 33, 36 eingestellt. Ferner erfolgt die Drehung in oder entgegen der Drehrichtung 28, wie es anhand der Fig. 2 entsprechend erläutert ist. Somit können sich unterschiedliche Positionierungen der Halteelemente 9, 9A ergeben, die sich in unterschiedlichen Positionen der Befestigungshülsen 13, 13A relativ zu dem jeweiligen befestigungsmittelseitigen Verbindungsabschnitt 11, 11A auswirken. Beispielsweise kann das Halteelement 9A weiter in der Drehrichtung 28 gedreht sein als das Haltelement 9, wie es in der Fig. 5 veranschaulicht ist. Wenn beispielsweise die Schnittpunkte 20, 20A auf der gemeinsamen Hilfslinie 53 liegen, die parallel zu der Längsachse 8 orientiert ist und in der Ausrichtfläche 21 liegt, wie es anhand der Fig. 4 und 5 veranschaulicht ist, dann kann sich aufgrund der unterschiedlichen Drehrichtungen 28 für die Befestigungshülse 13 eine Verstellung in der radialen Richtung 36 ergeben, während sich für die Befestigungshülse 13A eine radiale Verstellung entgegen der radialen Richtung 36 ergibt. In der Folge ergeben sich unterschiedliche Ausgestaltungen bezüglich des jeweiligen Positionierungsspiels 34, 34A beziehungsweise des jeweiligen Ringspalts 34, 34A bei den Haltern 3, 4, wie es in der Fig. 5 veranschaulicht ist.

Nach der Positionierung beziehungsweise Verbindung der Bauteile stellt sich in der Projektion auf die Ausrichtfläche 21 betrachtet der gewünschte Abstand 54 zwischen der Längsachse 8 und dem Schnittpunkt 20A der Befestigungshülse 13 ein. Ferner stellt sich in der Projektion auf die Ausrichtfläche 21 betrachtet ein gewünschter Abstand 55 zwischen der Rohrachse 8 und dem Schnittpunkt 20A der Befestigungshülse 13A ein. In diesem Ausführungsbeispiel liegen die beiden Schnittpunkte 20, 20A auf der Hilfslinie 53, die parallel zu der Rohrachse 8 ist, so dass die Abstände 54, 55 gleich sind. Bei einer abgewandelten Ausgestaltung können allerdings auch unterschiedliche große Abstände 54, 55 für die einzelnen Halter 3, 4 vorgegeben sein.

Bei der Anordnung 1 gemäß dem ersten Ausführungsbeispiel, das anhand der Fig. 1 bis 3 beschrieben ist, ist das Aufnahmeteil 12 auf einer von der Unterseite 29 abgewandten Seite des befestigungsmittelseitigen Verbindungsabschnitts 11 angeordnet. Bei der Anordnung 1 gemäß dem zweiten Ausführungsbeispiel, das anhand der Fig. 4 und 5 beschrieben ist, ist das Aufnahmeteil 12 an der Unterseite 29 des befestigungsmittelseitigen Verbindungsabschnitts 11 angeordnet. Bei beiden Ausführungsbeispielen umschließt das Aufnahmeteil 12 die Befestigungshülse 13 umfänglich. Ferner ist die Ausnehmung 35 bei dem ersten Ausführungsbeispiel und dem zweiten Ausführungsbeispiel jeweils als Durchgangsbohrung 35 ausgestaltet. Das ringförmige Aufnahmeteil 12, das die Befestigungshülse 13 umfänglich umschließt, kann bei der Montage von der jeweiligen Seite auf die Befestigungshülse 13 aufgeschoben werden.

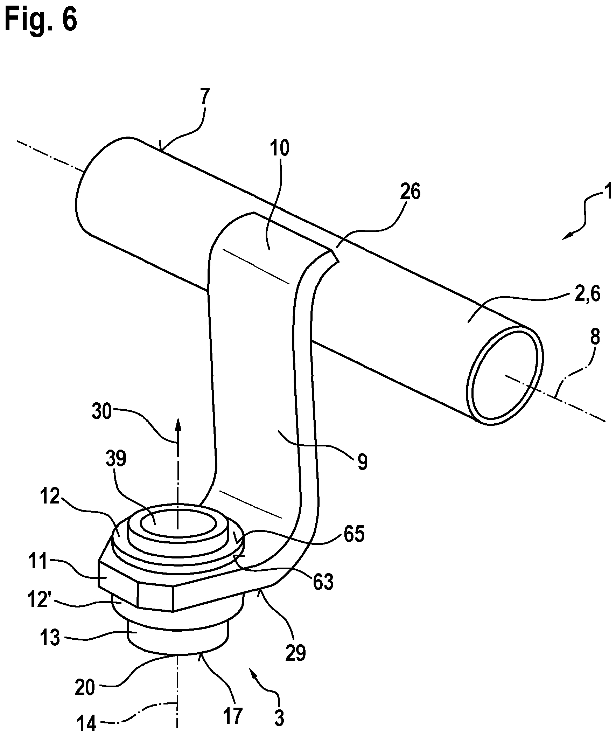

Fig. 6 zeigt die in Fig. 1 dargestellte Anordnung 1 in einer auszugsweisen, schematischen, räumlichen Darstellung entsprechend einem dritten Ausführungsbeispiel. In diesem Ausführungsbeispiel ist wie bei dem anhand der Fig. 1 beschriebenen ersten Ausführungsbeispiel ein Aufnahmeteil 12 vorgesehen, das auf der von der Unterseite 29 abgewandten Seite des befestigungsmittelseitigen Verbindungsabschnitts 11 angeordnet ist. Außerdem ist ein weiteres Aufnahmeteil 12' vorgesehen, das zum Verbinden der Befestigungshülse 13 mit dem befestigungsmittelseitigen Verbindungsabschnitt 11 dient. Der befestigungsmittelseitige Verbindungsabschnitt 11 ist zwischen dem Aufnahmeteil 12 und dem weiteren Aufnahmeteil 12' angeordnet. Somit ist eine verbesserte Verbindung über die beiden Aufnahmeteile 12, 12' zwischen dem Haltelement 9 und der Befestigungshülse 13 realisiert.

Die Ausnehmung 35, durch die sich die Befestigungshülse 13 erstreckt, ist als Durchgangsbohrung 35 ausgestaltet.

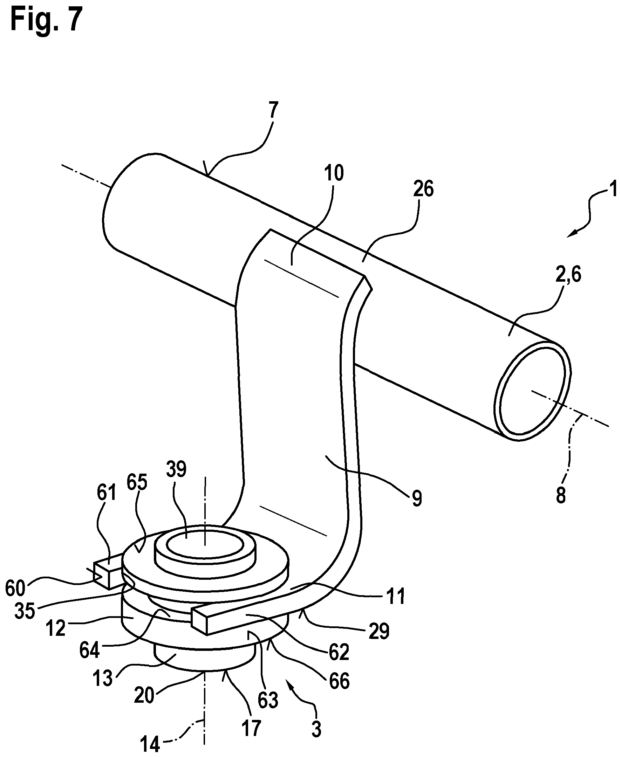

Fig. 7 zeigt die in Fig. 1 dargestellte Anordnung 1 in einer auszugsweisen, schematischen, räumlichen Darstellung entsprechend einem vierten Ausführungsbeispiel. In diesem Ausführungsbeispiel ist die Ausnehmung 35 des Verbindungsabschnitts 11 zu einer Seite 60 offen ausgestaltet. In diesem Ausführungsbeispiel weist der befestigungsmittelseitige Verbindungsabschnitt 11 zwei parallel zueinander angeordnete Arme 61, 62 auf, so dass sich ein U-förmiger Verbindungsabschnitt 11 ergibt. Zwischen die Arme 61, 62 wird das Aufnahmeteil 12 von der offenen Seite 60 her eingesetzt. Im eingesetzten Zustand ist das Aufnahmeteil 12 somit entlang der Befestigungsachse 14 fixiert. Allerdings kann die Befestigungshülse 13 zur Positionierung zunächst noch entlang der Befestigungsachse 14 relativ zu dem Aufnahmeteil 12 beziehungsweise dem befestigungsmittelseitigen Verbindungsabschnitt 11 positioniert werden. Im positionierten Zustand erfolgt dann die Verbindung des Aufnahmeteils 12 einerseits mit dem befestigungsmittelseitigen Verbindungsabschnitt 11, insbesondere den Armen 61, 62, und andererseits der Befestigungshülse 13.

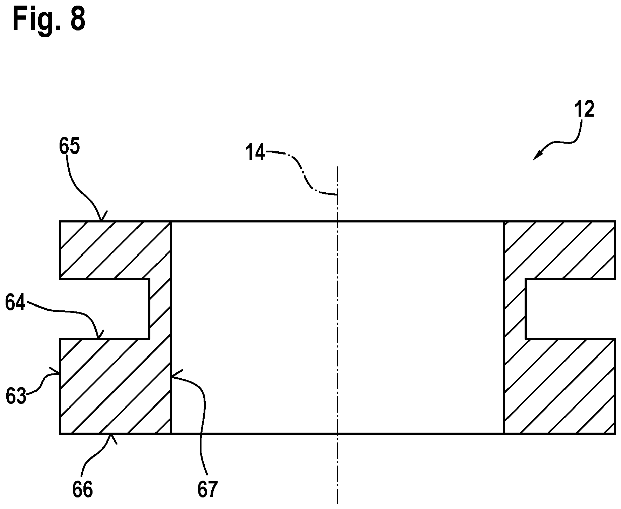

Fig. 8 zeigt das Aufnahmeteil 12 der in Fig. 7 dargestellten Anordnung 1 in einer schematischen, axialen Schnittdarstellung entsprechend dem vierten Ausführungsbeispiel. Das Aufnahmeteil 12 weist eine Außenseite 63 auf. An der Außenseite 63 ist eine umlaufende Aussparung in dem Aufnahmeteil 12 vorgesehen. In diesem Ausführungsbeispiel ist die Aussparung 64 als umlaufende Nut 64 ausgestaltet. Die Aussparung 64 ist hierdurch von Stirnseiten 65, 66 beabstandet. Zum Einbringen des Aufnahmeteils 12 in die Ausnehmung 35 des befestigungsmittelseitigen Verbindungsabschnitts 11 muss dieser daher die offene Seite 60 aufweisen.

Bei einer abgewandelten Ausgestaltung kann sich die Aussparung 64 auch bis zu einer der Stirnseiten 65, 66 erstrecken. Die Ausnehmung 35 des befestigungsmittelseitigen Verbindungsabschnitts 11 kann dann auch als Durchgangsbohrung 35 ausgestaltet sein.

Der Vorteil des Aufnahmeteils 12, das sich zumindest abschnittsweise durch die Ausnehmung 35 des befestigungsmittelseitigen Verbindungsabschnitts 11 entlang der Achse 14 erstreckt, ist, dass eine Anbindungsfläche 67 zu der Befestigungshülse 13 entlang der Befestigungsachse 14 verlängert und somit insgesamt vergrößert wird. Bei der nutförmigen Ausgestaltung der Aussparung 64 muss allerdings eine Dicke des befestigungsmittelseitigen Verbindungsabschnitts 11 entlang der Achse 14 an die entsprechende Ausdehnung der Aussparung 64 angepasst sein. Der befestigungsmittelseitige Verbindungsabschnitt 11 greift dann im montierten Zustand mit seinen Armen 61, 62 in die Aussparung 64 des Aufnahmeteils 12 ein.

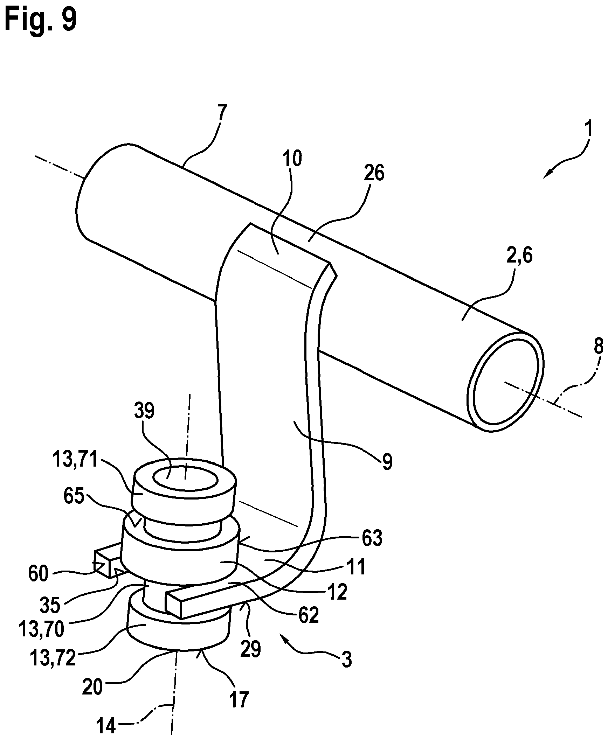

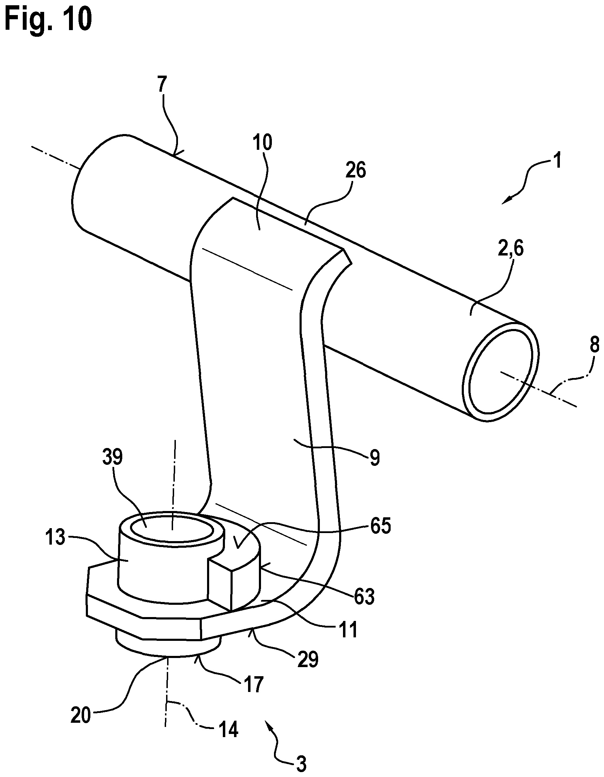

Fig. 9 zeigt die in Fig. 1 dargestellte Anordnung 1 in einer auszugsweisen, schematischen, räumlichen Darstellung entsprechend einem fünften Ausführungsbeispiel. In diesem Ausführungsbeispiel weist die Befestigungshülse 13 einen Befestigungsabschnitt 70 und Endabschnitte 71, 72 auf. Der Befestigungsabschnitt 70 ist zwischen den Endabschnitten 71, 72 vorgesehen. Der Befestigungsabschnitt 70 der Befestigungshülse 13 ist relativ zu den Endabschnitten 71, 72 verjüngt ausgestaltet. An dem Befestigungsabschnitt 70 ist das Aufnahmeteil 12 zum Verbinden der Befestigungshülse 13 mit dem befestigungsmittelseitigen Verbindungsabschnitt 11 angeordnet. Um das Aufnahmeteil 12 an dem Befestigungsabschnitt 70 anzuordnen, kann die Befestigungshülse 13 beispielsweise mehrteilig ausgestaltet sein. Bei einer abgewandelten Ausgestaltung kann auch das Aufnahmeteil 12 nur teilringförmig ausgestaltet sein, wie es entsprechend anhand der Fig. 10 beschrieben ist.

Der Vorteil der Ausgestaltung der Befestigungshülse 13 mit dem verjüngten Befestigungsabschnitt 70 besteht darin, dass hierdurch auch die Geometrie, insbesondere ein Durchmesser der Ausnehmung 35, verkleinert werden kann. Dadurch verkleinert sich auch die Außengeometrie des Halteelements 9. Wenn zwei Endabschnitte 71, 72 vorgesehen sind, dann ist vorzugsweise eine offene Seite 60 an dem befestigungsmittelseitigen Verbindungsabschnitt 11 vorgesehen.

Fig. 10 zeigt die in Fig. 1 dargestellte Anordnung 1 in einer auszugsweisen, schematischen, räumlichen Darstellung entsprechend einem sechsten Ausführungsbeispiel. In diesem Ausführungsbeispiel ist das Aufnahmeteil 12 umfänglich offen. Speziell ist das Aufnahmeteil 12 in diesem Ausführungsbeispiel als halbringförmiges Aufnahmeteil 12 ausgestaltet. Das dadurch teilringförmig ausgestaltete Aufnahmeteil 12 umschließt die Befestigungshülse 13 nur teilweise. Hierdurch kann gegebenenfalls auch der benötigte Platzbedarf verringert werden. Ferner wird dadurch die Anordnung des Aufnahmeteils 12 im jeweiligen Anwendungsfall gegebenenfalls erleichtert. Speziell bei der Ausgestaltung der Befestigungshülse 13, wie sie anhand der Fig. 9 veranschaulicht ist, kann das Aufnahmeteil 12 dann in vorteilhafter Weise angeordnet werden.

Je nach Ausgestaltung sind unterschiedliche Abwandlungen möglich. Speziell können je nach Anwendungsfall gleiche oder unterschiedliche Aufnahmeteile 12, 12' zum Einsatz kommen. Speziell können unterschiedliche Scheibendicken und Durchmesser der Aufnahmeteile 12, 12' eines Halters 3 und/oder unterschiedliche Aufnahme 12, 12A, 12B an mehreren Haltern 3 bis 5 zum Einsatz kommen.

In vorteilhafter Weise kann bei der Positionierung die Befestigungshülse 13 entlang der Befestigungsachse 14 verschoben werden, so dass die Unterseite 17 der Befestigungshülse 13 den definierten Abstand 31 zur Oberfläche (Auflagefläche) der Anschlussgeometrie, insbesondere der Brennkraftmaschine 16, hat.

Das Aufnahmeteil 12 kann gemeinsam mit der Befestigungshülse 13 radial in den radialen Richtungen 33, 36 verschoben werden, so dass die Befestigungsachse 14 des Aufnahmeteils 12 beziehungsweise der Befestigungshülse 13 koaxial zur Achse 37 der Gewindebohrung 38 oder dergleichen ausgerichtet werden kann.

Das Halteelement 9 kann ferner um die Längsachse (Rohrachse) 8 geschwenkt beziehungsweise gedreht werden, so dass die Unterseite 29 oder die von der Unterseite 29 abgewandte Seite, an der im jeweiligen Anwendungsfall das Aufnahmeteil 12 fixiert wird, parallel zur Oberfläche 18 der Anschlussgeometrie 16 positioniert werden kann.

Falls erforderlich, kann das Halteelement 9 entlang der Längsachse 8 axial verschoben werden, was in oder entgegen der Richtung 32 möglich ist, um einen zusätzlichen Toleranzausgleich der Befestigungsachse 14 zu ermöglichen.

Die Genauigkeit der Positionierung der einzelnen Bauteile in der Baugruppe für die Anordnung 1 wird durch den Einstellvorgang des Verbindungsverfahrens während es Fügens erreicht. Für den Einstellvorgang wird für jeden Halter 3 bis 5 zumindest ein Aufnahmeteil 12, 12', 12A, 12B genutzt.

Der Fügeprozess erfolgt durch Positionieren der Einzelteile zueinander und fixieren der Einzelteile mit Hilfe zumindest eines Aufnahmeteils 12, 12', 12A, 12B in einem spannungsfreien Zustand.

Die Aufnahmeteile 12, 12', 12A, 12B können hierbei in Form eines geschlossenen Rings ausgeführt sein. Die Aufnahmeteile 12, 12', 12A, 12B können allerdings auch in anderer Form ausgestaltet sein, zum Beispiel als Halbschale, Quader oder Sichel.

Die Erfindung ist nicht auf die beschriebenen Ausführungsbeispiele beschränkt.

## Patentansprüche

1. Vorrichtung mit einem Halter (3) und einer Komponente (2), insbesondere einem Brennstoffverteiler (2), zur Befestigung an einer Brennkraftmaschine (16), mit einem Halteelement (9), wobei das Halteelement (9) einen komponentenseitigen Verbindungsabschnitt (10) aufweist, an dem das Halteelement (9) mit der Komponente (2) verbindbar ist, und wobei das Halteelement (9) einen befestigungsmittelseitigen Verbindungsabschnitt (11) aufweist, an dem das Halteelement (9) über ein Befestigungsmittel (15) an der Brennkraftmaschine (16) befestigbar ist,
wobei zumindest ein Aufnahmeteil (12) und eine Befestigungshülse (13) vorgesehen sind, dass das Aufnahmeteil (12) zum Verbinden der Befestigungshülse (13) mit dem befestigungsmittelseitigen Verbindungsabschnitt (11) des Halteelements (9) dient und dass die Befestigungshülse (13) eine Durchgangsöffnung (39) aufweist, durch die das Befestigungsmittel (15) führbar ist,
und wobei die Komponente (2) einen rohrförmigen Grundkörper (6) aufweist und zumindest ein Befestigungsbereich (26, 26A, 26B) einer Außenseite (7) des Grundkörpers (6) zumindest näherungsweise als Teil einer Zylindermantelfläche ausgestaltet ist und wobei der zumindest eine Halter (3 - 5) an seinem komponentenseitigen Verbindungsabschnitt (10) mit dem Befestigungsbereich (26, 26A, 26B) an der Außenseite (7) des Grundkörpers (6) befestigt ist,
**dadurch gekennzeichnet,**
**dass** an dem befestigungsmittelseitigen Verbindungsabschnitt (11) eine Ausnehmung (35) vorgesehen ist, in der die Befestigungshülse (13) angeordnet ist und dass zwischen der Befestigungshülse (13) und der Ausnehmung (35) ein Positionierungsspiel (34) vorgesehen ist, das vor dem Verbinden der Befestigungshülse (13) über das Aufnahmeteil (12) mit dem befestigungsmittelseitigen Verbindungsabschnitt (11) eine Positionierung der Befestigungshülse (13) in einer axialen Richtung (30) der Befestigungshülse (13) und zumindest einer radialen Richtung (33, 36) der Befestigungshülse (13) relativ zu dem befestigungsmittelseitigen Verbindungsabschnitt (11) ermöglicht, wodurch ein Abstand (31) zwischen der Unterseite (17) der Befestigungshülse (13) und der Oberfläche (18) eines Zylinderkopfs der Brennkraftmaschine (16) einstellbar ist,
wobei das Aufnahmeteil (12) als teilringförmiges Aufnahmeteil (12) ausgestaltet ist und die Befestigungshülse (13) umfänglich teilweise umschließt oder das Aufnahmeteil (12) als ringförmiges Aufnahmeteil (12) ausgestaltet ist und die Befestigungshülse (13) umfänglich umschließt,
und wobei der komponentenseitige Verbindungsabschnitt (10) stoffschlüssig mit dem rohrförmigen Grundkörper (6) verbunden ist und das Aufnahmeteil (12) mit dem befestigungsmittelseitigen Verbindungsabschnitt (11) stoffschlüssig verbunden ist und das Aufnahmeteil (12) mit der Befestigungshülse (13) stoffschlüssig verbunden ist.

2. Vorrichtung nach Anspruch 1,
**dadurch gekennzeichnet,**
**dass** an dem komponentenseitigen Verbindungsabschnitt (10) eine Anlagefläche (25) ausgestaltet ist, die zumindest näherungsweise als Teil einer Zylindermantelfläche ausgestaltet ist.

3. Vorrichtung nach Anspruch 1,
**dadurch gekennzeichnet,**
**dass** die Ausnehmung (35), die an dem befestigungsmittelseitigen Verbindungsabschnitt (11) vorgesehen ist, als Durchgangsbohrung (35) ausgestaltet ist oder dass die Ausnehmung (35), die an dem befestigungsmittelseitigen Verbindungsabschnitt (11) vorgesehen ist, zu einer Seite (60) des befestigungsmittelseitigen Verbindungsabschnitts (11) offen ist.

4. Vorrichtung nach einem der Ansprüche 1 bis 3,
**dadurch gekennzeichnet,**
**dass** ein weiteres Aufnahmeteil (12') vorgesehen ist, dass das weitere Aufnahmeteil (12') zum Verbinden der Befestigungshülse (13) mit dem befestigungsmittelseitigen Verbindungsabschnitt (11) des Halteelements (9) dient und dass der befestigungsmittelseitige Verbindungsabschnitt (11) zum Verbinden der Befestigungshülse (13) mit dem befestigungsmittelseitigen Verbindungsabschnitt (11) zwischen dem Aufnahmeteil (12) und dem weiteren Aufnahmeteil (12') angeordnet ist.

5. Vorrichtung nach einem der Ansprüche 1 bis 4,
**dadurch gekennzeichnet,**
**dass** das Aufnahmeteil (12) an einer Außenseite (63) eine zumindest teilweise umlaufende Aussparung (64) aufweist und dass der befestigungsmittelseitige Verbindungsabschnitt (11) zum Verbinden der Befestigungshülse (13) mit dem befestigungsmittelseitigen Verbindungsabschnitt (11) in die Aussparung (64) des Aufnahmeteils (12) eingreift.

6. Vorrichtung nach einem der Ansprüche 1 bis 5,
**dadurch gekennzeichnet,**
**dass** die Befestigungshülse (13) einen Befestigungsabschnitt (70) aufweist, an dem das Aufnahmeteil (12) zum Verbinden der Befestigungshülse (13) mit dem befestigungsmittelseitigen Verbindungsabschnitt (11) angeordnet ist, und dass die Befestigungshülse (13) an dem befestigungsmittelseitigen Verbindungsabschnitt (11) relativ zu zumindest einem Endabschnitt (71, 72) der Befestigungshülse (13) verjüngt ausgestaltet ist.

7. Vorrichtung nach einem der vorhergehenden Ansprüche,
**dadurch gekennzeichnet,**
**dass** das Halteelement (9) von seinem komponentenseitigen Verbindungsabschnitt (10) bis hin zu seinem befestigungsmittelseitigen Verbindungsabschnitt (11) insgesamt eine S-Form besitzt.

8. Herstellungsverfahren einer Vorrichtung nach einem der Ansprüche 1 bis 7, wobei der rohrförmige Grundkörper (6) zwischen zwei Aufnahmekegel (41, 42) aufgenommen wird, wobei die Befestigungshülse (13, 13A) des zumindest einen Halters (3 - 5) so auf einen zugeordneten Aufsteckdorn (43, 44) gesteckt wird, dass eine Unterseite (29, 29A) der Befestigungshülse (13, 13A) plan auf einer Ausrichtfläche (21, 45, 46) aufliegt und zentrisch auf dem Aufsteckdorn (43, 44) steckt, wobei das Aufnahmeteil (12, 12A) in zumindest einer radialen Richtung (33, 36) an der Befestigungshülse (13, 13A) positioniert wird, wobei das Halteelement (9, 9A) mit seinem komponentenseitigen Verbindungsabschnitt (10, 10A) an den rohrförmigen Grundkörper (6) angelegt und so um eine Rohrachse (8) des rohrförmigen Grundkörpers (6) gedreht wird, dass eine Unterseite (17, 17A) des befestigungsmittelseitigen Verbindungsabschnitts (11, 11A) des Haltelements (9, 9A) parallel zu der Ausrichtfläche (21) ist, wobei das zumindest eine Aufnahmeteil (12, 12A) relativ zu der Befestigungshülse (13, 13A) axial zu der Durchgangsöffnung (39) der Befestigungshülse (13) so verschoben wird, dass das zumindest eine Aufnahmeteil (12, 12A) an dem befestigungsmittelseitigen Verbindungsabschnitt (11, 11A) anliegt, wobei der komponentenseitige Verbindungsabschnitt (10, 10A) stoffschlüssig mit dem rohrförmigen Grundkörper (6) verbunden wird, wobei das Aufnahmeteil (12, 12A) mit dem befestigungsmittelseitigen Verbindungsabschnitt (11, 11A) stoffschlüssig verbunden wird und wobei das Aufnahmeteil (12, 12A) mit der Befestigungshülse (13, 13A) stoffschlüssig verbunden wird.

## Claims

1. Device having a holder (3) and a component (2), in particular a fuel distributor (2), for fastening to an internal combustion engine (16), having a holding element (9), wherein the holding element (9) has a component-side connecting portion (10) at which the holding element (9) can be connected to the component (2), and wherein the holding element (9) has a fastening means-side connecting portion (11) at which the holding element (9) can be fastened to the internal combustion engine (16) via a fastening means (15), wherein at least one receiving part (12) and a fastening sleeve (13) are provided, that the receiving part (12) serves for connecting the fastening sleeve (13) to the fastening means-side connecting portion (11) of the holding element (9), and that the fastening sleeve (13) has a through-opening (39) through which the fastening means (15) can be guided, and wherein the component (2) has a tubular basic body (6), and at least one fastening region (26, 26A, 26B) of an outer side (7) of the basic body (6) is at least approximately configured as part of a cylinder lateral surface, and wherein the at least one holder (3 - 5) is fastened at its component-side connecting portion (10) to the fastening region (26, 26A, 26B) on the outer side (7) of the basic body (6),
**characterized**
**in that** an aperture (35), in which the fastening sleeve (13) is arranged, is provided on the fastening means-side connecting portion (11), and in that a positioning play (34) is provided between the fastening sleeve (13) and the aperture (35) and makes it possible, before the fastening sleeve (13) is connected to the fastening means-side connecting portion (11) via the receiving part (12), for the fastening sleeve (13) to be positioned in an axial direction (30) of the fastening sleeve (13) and at least one radial direction (33, 36) of the fastening sleeve (13) relative to the fastening means-side connecting portion (11), with the result that a distance (31) between the lower side (17) of the fastening sleeve (13) and the surface (18) of a cylinder head of the internal combustion engine (16) can be adjusted, wherein the receiving part (12) is configured as a partially annular receiving part (12) and circumferentially partially encloses the fastening sleeve (13), or the receiving part (12) is configured as an annular receiving part (12) and circumferentially encloses the fastening sleeve (13), and wherein the component-side connecting portion (10) is connected to the tubular basic body (6) in an integrally bonded manner, and the receiving part (12) is connected to the fastening means-side connecting portion (11) in an integrally bonded manner, and the receiving part (12) is connected to the fastening sleeve (13) in an integrally bonded manner.

2. Device according to Claim 1,
**characterized**
**in that** a bearing surface (25), which is at least approximately configured as part of a cylinder lateral surface, is configured on the component-side connecting portion (10).

3. Device according to Claim 1,
**characterized**
**in that** the aperture (35) which is provided on the fastening means-side connecting portion (11) is configured as a through-hole (35), or in that the aperture (35) which is provided on the fastening means-side connecting portion (11) is open to one side (60) of the fastening means-side connecting portion (11).

4. Device according to one of Claims 1 to 3,
**characterized**
**in that** a further receiving part (12') is provided, in that the further receiving part (12') serves for connecting the fastening sleeve (13) to the fastening means-side connecting portion (11) of the holding element (9), and in that, for connecting the fastening sleeve (13) to the fastening means-side connecting portion (11), the fastening means-side connecting portion (11) is arranged between the receiving part (12) and the further receiving part (12').

5. Device according to one of Claims 1 to 4,
**characterized**
**in that** the receiving part (12) has an at least partially peripheral recess (64) on an outer side (63), and in that, for connecting the fastening sleeve (13) to the fastening means-side connecting portion (11), the fastening means-side connecting portion (11) engages in the recess (64) of the receiving part (12).

6. Device according to one of Claims 1 to 5,
**characterized**
**in that** the fastening sleeve (13) has a fastening portion (70) on which the receiving part (12) is arranged to connect the fastening sleeve (13) to the fastening means-side connecting portion (11), and in that the fastening sleeve (13) is configured to taper on the fastening means-side connecting portion (11) relative to at least one end portion (71, 72) of the fastening sleeve (13).

7. Device according to one of the preceding claims,
**characterized**
**in that** the holding element (9) has overall an S shape from its component-side connecting portion (10) to its fastening means-side connecting portion (11) .

8. Method for producing a device according to one of Claims 1 to 7, wherein the tubular basic body (6) is received between two receiving cones (41, 42), wherein the fastening sleeve (13, 13A) of the at least one holder (3 - 5) is plugged onto an assigned plug-on mandrel (43, 44) in such a way that a lower side (29, 29A) of the fastening sleeve (13, 13A) lies flat on an orientation surface (21, 45, 46) and is situated centrally on the plug-on mandrel (43, 44), wherein the receiving plug (12, 12A) is positioned on the fastening sleeve (13, 13A) in at least one radial direction (33, 36), wherein the holding element (9, 9A) is placed with its component-side connecting portion (10, 10A) on the tubular basic body (6) and rotated about a tube axis (8) of the tubular basic body (6) in such a way that a lower side (17, 17A) of the fastening means-side connecting portion (11, 11A) of the holding element (9, 9A) is parallel to the orientation surface (21), wherein the at least one receiving part (12, 12A) is displaced relative to the fastening sleeve (13, 13A) axially with respect to the through-opening (39) of the fastening sleeve (13) in such a way that the at least one receiving part (12, 12A) bears against the fastening means-side connecting portion (11, 11A), wherein the component-side connecting portion (10, 10A) is connected to the tubular basic body (6) in an integrally bonded manner, wherein the receiving part (12, 12A) is connected to the fastening means-side connecting portion (11, 11A) in an integrally bonded manner, and wherein the receiving part (12, 12A) is connected to the fastening sleeve (13, 13A) in an integrally bonded manner.

## Revendications

1. Dispositif comprenant un support de fixation (3) et un composant (2), en particulier un distributeur de carburant (2) pour la fixation à un moteur à combustion interne (16), comprenant un élément de retenue (9), l'élément de retenue (9) présentant une partie de raccordement du côté du composant (10), au niveau de laquelle l'élément de retenue (9) peut être raccordé au composant (2), et l'élément de retenue (9) présentant une partie de raccordement (11) du côté du moyen de fixation, au niveau de laquelle l'élément de retenue (9) peut être fixé au moteur à combustion interne (16) par le biais d'un moyen de fixation (15), au moins une partie de réception (12) et une douille de fixation (13) étant prévues, que la partie de réception (12) serve à raccorder la douille de fixation (13) à la partie de raccordement (11) du côté du moyen de fixation de l'élément de retenue (9) et que la douille de fixation (13) présente une ouverture de passage (39) à travers laquelle le moyen de fixation (15) peut être guidé, et le composant (2) présentant un corps de base (6) de forme tubulaire et au moins une région de fixation (26, 26A, 26B) d'un côté extérieur (7) du corps de base (6) étant configurée au moins approximativement sous forme de partie d'une surface d'enveloppe cylindrique, et l'au moins un support de fixation (3-5) étant fixé au niveau de sa partie de raccordement (10) du côté du composant à la région de fixation (26, 26A, 26B) au niveau du côté extérieur (7) du corps de base (6),
**caractérisé en ce**
**qu'**un évidement (35) est prévu au niveau de la partie de raccordement (11) du côté du moyen de fixation, dans lequel est disposée la douille de fixation (13) et **en ce qu'**entre la douille de fixation (13) et l'évidement (35) est prévu un jeu de positionnement (34) qui, avant le raccordement de la douille de fixation (13) par le biais de la partie de réception (12) à la partie de raccordement (11) du côté du moyen de fixation, permet un positionnement de la douille de fixation (13) dans une direction axiale (30) de la douille de fixation (13) et dans au moins une direction radiale (33, 36) de la douille de fixation (13) par rapport à la partie de raccordement (11) du côté du moyen de fixation, de sorte qu'une distance (31) entre le côté inférieur (17) de la douille de fixation (13) et la surface (18) d'une culasse du moteur à combustion interne (16) puisse être ajustée,
la partie de réception (12) étant réalisée sous forme de partie de réception (12) en forme de bague partielle et entourant en partie sur la périphérie la douille de fixation (13) ou la partie de réception (12) étant réalisée sous forme de partie de réception (12) de forme annulaire et entourant sur la périphérie la douille de fixation (13), et la partie de raccordement (10) du côté du composant étant raccordée par liaison de matière au corps de base (6) de forme tubulaire et la partie de réception (12) étant raccordée par liaison de matière à la partie de raccordement (11) du côté du moyen de fixation et la partie de réception (12) étant raccordée par liaison de matière à la douille de fixation (13).

2. Dispositif selon la revendication 1,
**caractérisé en ce**
**qu'**une surface d'appui (25) est réalisée au niveau de la partie de raccordement (10) du côté du composant, laquelle est réalisée au moins approximativement sous forme de partie d'une surface d'enveloppe cylindrique.

3. Dispositif selon la revendication 1,
**caractérisé en ce que**
l'évidement (35) qui est prévu au niveau de la partie de raccordement (11) du côté du moyen de fixation est réalisé sous forme d'alésage traversant (35) ou **en ce que** l'évidement (35) qui est prévu au niveau de la partie de raccordement (11) du côté du moyen de fixation est ouvert vers un côté (60) de la partie de raccordement (11) du côté du moyen de fixation.

4. Dispositif selon l'une quelconque des revendications 1 à 3,
**caractérisé en ce**
**qu'**une partie de réception supplémentaire (12') est prévue, **en ce que** la partie de réception supplémentaire (12') sert à raccorder la douille de fixation (13) à la partie de raccordement (11) du côté du moyen de fixation de l'élément de retenue (9) et **en ce que** la partie de raccordement (11) du côté du moyen de fixation est disposée de manière à raccorder la douille de fixation (13) à la partie de raccordement (11) du côté du moyen de fixation entre la partie de réception (12) et la partie de réception supplémentaire (12').

5. Dispositif selon l'une quelconque des revendications 1 à 4,
**caractérisé en ce que**
la partie de réception (12) présente, au niveau d'un côté extérieur (63), un évidement (64) au moins en partie périphérique et **en ce que** la partie de raccordement (11) du côté du moyen de fixation s'engage dans l'évidement (64) de la partie de réception (12) pour raccorder la douille de fixation (13) à la partie de raccordement (11) du côté du moyen de fixation.

6. Dispositif selon l'une quelconque des revendications 1 à 5,
**caractérisé en ce que**
la douille de fixation (13) présente une partie de fixation (70) au niveau de laquelle est disposée la partie de réception (12) pour raccorder la douille de fixation (13) à la partie de raccordement (11) du côté du moyen de fixation, et **en ce que** la douille de fixation (13) est réalisée sous forme rétrécie au niveau de la partie de raccordement (11) du côté du moyen de fixation par rapport à au moins une partie d'extrémité (71, 72) de la douille de fixation (13).

7. Dispositif selon l'une quelconque des revendications précédentes,
**caractérisé en ce que**
l'élément de retenue (9) possède dans l'ensemble une forme en S depuis sa partie de raccordement (10) du côté du composant jusqu'à sa partie de raccordement (11) du côté du moyen de fixation.

8. Procédé de fabrication d'un dispositif selon l'une quelconque des revendications 1 à 7, dans lequel le corps de base (6) de forme tubulaire est reçu entre deux cônes de réception (41, 42), la douille de fixation (13, 13A) de l'au moins un support de fixation (3-5) étant enfichée sur un mandrin d'enfichage associé (43, 44) de telle sorte qu'un côté inférieur (29, 29A) de la douille de fixation (13, 13A) repose à plat sur une surface d'orientation (21, 45, 46) et est enfiché centralement sur le mandrin d'enfichage (43, 44), la partie de réception (12, 12A) étant positionnée dans au moins une direction radiale (33, 36) au niveau de la douille de fixation (13, 13A), l'élément de retenue (9, 9A) étant appliqué avec sa partie de raccordement (10, 10A) du côté du composant contre le corps de base (6) de forme tubulaire et étant tourné autour d'un axe tubulaire (8) du corps de base (6) de forme tubulaire de telle sorte qu'un côté inférieur (17, 17A) de la partie de raccordement (11, 11A) du côté du moyen de fixation de l'élément de retenue (9, 9A) soit parallèle à la surface d'orientation (21), l'au moins une partie de réception (12, 12A) étant déplacée par rapport à la douille de fixation (13, 13A) axialement vers l'ouverture de passage (39) de la douille de fixation (13) de telle sorte que l'au moins une partie de réception (12, 12A) s'applique contre la partie de raccordement (11, 11A) du côté du moyen de fixation, la partie de raccordement (10, 10A) du côté du composant étant raccordée par liaison de matière au corps de base (6) de forme tubulaire, la partie de réception (12, 12A) étant raccordée par liaison de matière à la partie de raccordement (11, 11A) du côté du moyen de fixation et la partie de réception (12, 12A) étant raccordée par liaison de matière à la douille de fixation (13, 13A).
